# EUROPEAN PATENT SPECIFICATION

(11) **EP 2 294 150 B1**
(45) Date of publication and mention of the grant of the patent: **20.05.2020**
(21) Application number: 09761680.9
(22) Date of filing: 08.06.2009
(51) Int. Cl.: C08K 5/02, C08G 18/48, B42D 25/29, C09D 175/04, D21H 21/40, B41M 7/00, C08K 5/205, C08G 18/44, D21H 19/24

(54) **METHOD FOR DIRT-RESISTANT TREATMENT OF BANK NOTES AND/OR SECURITY PAPERS IN GENERAL**
VERFAHREN ZUR SCHMUTZABWEISENDEN AUSRÜSTUNG VON BANKNOTEN UND/ODER WERTPAPIEREN IM ALLGEMEINEN
PROCÉDÉ DE TRAITEMENT ANTISALISSURE DE BILLETS DE BANQUE ET/OU DE PAPIERS DE SÉCURITÉ EN GÉNÉRAL

(30) Priority: 10.06.2008 IT VR20080065
(43) Date of publication of application: 16.03.2011
(73) Proprietor: FEDRIGONI S.P.A., 37135 Verona (IT)
(72) Inventor: TAMAGNINI, Paolo, I-60035 Jesi (IT)
(74) Representative: Modiano, Micaela Nadia
(86) International application number: PCT/EP2009/057005
(87) International publication number: WO 2009/150117

(56) References cited:
- WO-A-96/28610
- WO-A-2004/072378
- DE-A1-102006 046 368
- DE-B3- 10 348 070
- US-A1- 2003 190 429

## Description

### Technical field

The present invention relates to a method for dirt-resistant treatment of bank notes and/or security papers in general.

### Background Art

There are known and widespread surface treatments to be performed on paper, and particularly on bank note paper and on security paper in general, which are designed to ensure that the paper is resistant to dirt and to the washing performed after ink drying; however, it is evident that such surface treatments must not compromise the printability of the paper.

By way of example, it is known from GB 121749 to use butadiene-based polymers, whereas ES 2008179 discloses a treatment to be performed after the printing process and based on cellulose ethers/esters.

EP 860297 teaches a method in which the surface treatment, to be performed after printing, provides for the deposition of an acrylic-based film by UV polymerization.

EP 1099024 discloses a surface treatment performed with an acrylic-based polymer, whereas WO 9112372 and US 5,660,919 disclose treatments in which particular pigments are used.

The use of fluorinated polymers in surface treatments was considered by US 6,566,470 and in WO 0179313 to obtain compounds to be used, indeed as dirt-resistant treatment, on textile materials or on paper.

Although known treatments in some cases are widely used, they have evident limitations alongside their advantages.

Acrylic polymers and polybutadiene-based polymers in fact generally have an excessive affinity with the chemical nature of some types of dirt, and this inevitably entails a limitation to their use and to the effectiveness of the treatments that use them.

Also the treatments to be performed after the printing process, be they based on cellulose ethers/esters or obtained by UV polymerization, are not free from drawbacks.

In many situations, in fact, in the case of treatments based on cellulose esters/ethers, a not entirely satisfactory result has been observed, since it is necessary to combine them with the presence of waxes in the inks, whereas if treatments using UV polymerization are employed, it has been observed that highly dangerous emissions of radicals are released during the deposition process, with the consequent need to use rather expensive equipment as well as particular care in controlling environmental conditions.

As regards the use of pigments, first of all an alteration of the degree of opacity of the paper and a modification of the capacity to recognize the watermark has been observed. These aspects severely limit the possibilities of use of this type of treatment: in practice, in most cases the use of pigments is scarcely useful, if not contraindicated, especially if the treatment is performed with pigments having a very large specific surface area, with the result of being able to accumulate dirt and to limit the film-forming capacities of the polymers used in the treatment.

Finally, with reference to treatments that use fluorinated functional groups, they have been found to be rather effective, but they are very expensive: moreover, if they are used alone (without additives), an alteration of the printability characteristics of the paper has been observed: the paper does not get dirty but does not receive the correct quantity of ink.

### Disclosure of the Invention

The aim of the present invention is to provide a method for the dirt-resistant treatment of bank notes and/or security paper in general that is capable of eliminating, or at least reducing drastically, the drawbacks noted above in the treatments currently used.

Within this aim, an object of the present invention is to provide a method for dirt-resistant treatment of bank notes and/or security paper in general that is capable of ensuring that the treated surface has excellent printability and at the same time high resistance to dirt.

Another object of the invention is to provide a method for dirt-resistant treatment of bank notes and/or security paper in general that is capable of giving, especially to bank note paper, an excellent resistance to washing after ink drying.

Another object is to provide a method for dirt-resistant treatment of bank notes and/or security paper in general that is capable of ensuring satisfactory mechanical strength.

Another object of the invention is to provide a method for dirt-resistant treatment of bank notes and/or security paper in general that has a low production cost, so that its use is advantageous also from an economic standpoint.

This aim, these objects and others that will become better apparent hereinafter are achieved by a method for dirt-resistant treatment of bank notes and/or security paper in general, as defined in claim 1.

According to a further aspect, the invention provides a composition for the surface treatment of paper particularly for bank notes or the like, as defined in claim 11.

### Ways of carrying out the Invention

Further characteristics and advantages of the invention will become better apparent from the following detailed description of some preferred but not exclusive embodiments of a method for dirt-resistant treatment of bank notes and/or security paper in general according to the invention.

In the exemplary embodiments that follow, individual characteristics, given in relation specific examples, may actually be interchanged with other different characteristics that exist in other exemplary embodiments.

The present invention relates to a method for dirt-resistant treatment of bank notes and/or security paper.

The nature of typical dirt can be various, but its most common characteristics are:
- a fatty, oily nature;
- a color which is dark or generally different from the base color of the bank note or paper to be treated;
- its state (liquid, semisolid; microparticulate).

The method according to the invention deposits (or applies) on the surface to be treated a composition that comprises a polycarbonate-based aliphatic polyurethane and a polyether-based aliphatic polyurethane.

Advantageously, the dry weight ratio between the quantity of polycarbonate-based aliphatic polyurethane and the quantity of polyether-based aliphatic polyurethane in such composition is comprised between 0.25 and 4.

In practice, intermediate proportions between the polycarbonate-based aliphatic polyurethane and a polyether-based aliphatic polyurethane, considered as absolute dry weight, comprised between 20% and 80%, are found to be effective.

Both the polycarbonate-based aliphatic polyurethane and the polyether-based aliphatic polyurethane that can be used for the method according to the invention, and in particular to obtain the compound, are film-forming polymers of a linear kind.

Conveniently, both the polycarbonate-based aliphatic polyurethane and the polyether-based aliphatic polyurethane have a glass transition temperature (Tg) below -20°C.

Moreover, it has been found that it is particularly convenient to use polycarbonate-based aliphatic polyurethanes and polyether-based aliphatic polyurethanes that have a breaking load comprised between 15 MPa and 70 MPa and an elongation comprised between 150% and 600%.

It has been found that the method according to the invention, which uses, together with the polycarbonate-based aliphatic polyurethane, a polyether-based aliphatic polyurethane allows to obtain, on the treated surface on which the composition has been applied or deposited, a soft film, which is effective against the soilability of paper but at the same time can be printed very well.

In the method according to the invention, the relative percentages and proportions between the quantity of polycarbonate-based aliphatic polyurethane and the quantity of polyether-based aliphatic polyurethane can vary within the range indicated above according to the dirt-resistance characteristics that one wishes to achieve, to the degree of absorption set for the treatment, and to the mechanical strength to be obtained.

In particular, if the relative percentage of polycarbonate-based aliphatic polyurethane is increased progressively, higher dirt-resistance is achieved to the detriment of printability and resistance to washing, whereas if the relative percentage of polyether-based aliphatic polyurethane is predominant, lower dirt resistance is observed but better printability and resistance to washing, as well as optimum double creases.

Advantageously, the method according to the invention adds a fluorinated compound to the composition.

In particular, the dry weight percentage of the fluorinated compound with respect to the polyether-based aliphatic polyurethane is comprised between 1% and 10%, preferably between 3% and 7%.

The fluorinated compound comprises an aqueous dispersion of perfluoro substituted anionic acid.

The addition of the fluorinated compound to the composition allows to obtain paper that has better dirt-resistance performance and good stability.

In fact, using only a composition that comprises polycarbonate-based aliphatic polyurethane and polyether-based aliphatic polyurethane, especially if the percentage of polyether-based aliphatic polyurethane is increased in order to privilege printability, double creasing and washing resistance, it is possible to obtain a paper which, in certain conditions, can be contaminated by microparticulate fatty dirt.

In some particular cases, the pressure applied by dirty fingers (typically dirty with soil or oil), no matter how gentle, is sufficient to "embed" the solid particles in the deposited polymeric film (which by its very nature is in any case soft).

Once the dirt has become embedded, it is no longer removable and remains on the surface of the paper, deteriorating it and greatly shortening its circulating life.

The fluorinated compound minimizes chemical affinity between any particles of dirt and the polymeric material embedding surface, preventing the particle from adhering thereto and therefore facilitating its removal after the handling action.

The addition of fluorinated compounds can be dosed according to the results to be obtained, until the correct degree of repulsion required to keep the paper clean is achieved without compromising its printability, since inks are fatty and hydrophobic and consequently are chemically similar to dirt.

In view of what has been described above, it has been found that a dry weight percentage of the fluorinated compound with respect to the polyether-based aliphatic polyurethane comprised between 4% and 5% is optimum.

Conveniently, the composition to be deposited on the surface to be treated comprises a cross-linking agent selected from the group that comprises cross-linking agents of the melamine type and polyisocyanic cross-linking agents.

The dry weight percentage of the cross-linking agent with respect to the polyether-based aliphatic polyurethane is comprised between 15% and 30%, preferably between 18% and 26%, and more preferably between 20% and 24%.

According to a preferred practical embodiment, the composition is applied to the surface of the paper to be treated in liquid form with a solid content comprised between 15% and 45%.

The quantity of composition applied is adapted to allow the paper to absorb a quantity of dry material comprised between 2 and 14 g/m².

The methods for applying to the surface to be treated the composition (as mentioned, in liquid form) can be various. Among the many methods, mention is made of size pressing, film pressing, coating or passage through a printing machine.

Adequate anchoring of the ink can be checked with the following method.

A standard formulation of detergent solution is prepared with which resistance tests are performed by mixing:

| | |
|---|---|
| - water | 100 parts; |
| - Na₂CO₃ | 1 part; |
| - detergent | 0.5 parts. |

The printed specimen is immersed under agitation in the detergent solution heated to 93°C for 30 minutes.

The specimen is then taken, rinsed and dried with absorbent paper, and the quality of the print is compared with that of a printed and intact specimen, which therefore has not been treated with the detergent solution.

The present invention further provides a composition, particularly but not exclusively suitable for dirt-resistant surface treatment to be performed on paper, for example paper for bank notes or security paper.

Such composition comprises a polycarbonate-based aliphatic polyurethane and a polyether-based aliphatic polyurethane.

Advantageously, the dry weight ratio between the quantity of polycarbonate-based aliphatic polyurethane and the quantity of polyether-based aliphatic polyurethane is comprised between 0.25 and 4.

The composition can have a fluorinated compound in addition to the components listed above.

Conveniently, the dry weight percentage of the fluorinated compound with respect to the polyether-based aliphatic polyurethane in the composition is comprised between 1% and 10%, preferably between 3% and 7% and more preferably between 4% and 5%.

In particular, the fluorinated compound comprises an aqueous dispersion of perfluoro substituted anionic acid.

It has been found that it is particularly advantageous for the composition to also comprise a cross-linking agent selected from the group that comprises cross-linking agents of the melamine type and polyisocyanic cross-linking agents.

In this regard, the dry weight percentage of such cross-linking agent with respect to the polyether-based aliphatic polyurethane in the composition is comprised between 15% and 30%, preferably between 18% and 26% and more preferably between 20% and 24%.

The present invention also relates to a bank note or security paper in general which has, at least at one of its faces but preferably at both, a layer (film) of a composition as described earlier.

A practical example of execution of the method according to the invention is described hereafter:

### Example 1

A composition obtained by mixing the following substances is applied to a paper for bank notes by impregnation by passing through a so-called "size press" apparatus:
- 500 g of "Esacote 181", a polycarbonate-based aliphatic polyurethane in an approximately 40% aqueous dispersion, marketed by Lamberti Spa;
- 500 g of "Esacote 221", a polyether-based aliphatic polyurethane in a 40% aqueous dispersion, marketed by Lamberti Spa;

- 60 g of "Lodyne 2000 (C6/C8 fluorinated anionic compound)", a fluorinated compound with 18.5% solids, marketed by Ciba;
- 55 g of a polyisocyanic cross-linking agent with 80% active ingredient.

A quantity of composition was deposited such that 8 g/m² of composition when dry were deposited on the treated surface.

The soilability of the treated bank note was then assessed by means of various tests.

### Test 1

A formulation of synthetic dirt was prepared by mixing 20 g of bentonite screened at 325 mesh and 0.1 g of activated charcoal.

0.6 g of the mixture described above were taken and 0.6 g of vegetable oil and 0.6 g of ethyl alcohol were added.

500 g of ceramic balls were added to the above.

The entire system was introduced in a 2-liter plastics bottle together with 4 specimens of bank notes printed and treated as described in Example 1, to the corners of which screw-on Teflon weights were applied.

The bottle was rotated for 30 minutes at 72 rpm and the bank note specimens were extracted from it.

The Teflon weights were removed and the coarsest particles were removed from the surface of the paper with a cloth.

An untreated bank note specimen was compared with the treated one by means of a gray scale.

The treated bank notes had a score of 4-5 on a scale from 1 to 5 (1 = worst result, 5 = best result), where the acceptance limit is 3.

### Test 2

A formulation of synthetic dirt was prepared by mixing well:
- 1 g of kaolin screened at 65 mesh;
- 5 g of peat screened at 65 mesh;
- 20 g of quartz (Merck 107754);
- 0.5 g of type A synthetic sweat (0.05 g of L-histidine monochloride monohydrate; 0.5 g of sodium chloride; 0.5 g of disodium hydrogen phosphate dihydrate, added and brought to solution in 100 ml of distilled water);
- 0.5 g of type B synthetic sweat (0.05 g of L-histidine monochloride monohydrate; 0.5 g of sodium chloride; 0.22 g of sodium dihydrogen phosphate dihydrate, added and brought to solution in 100 ml of distilled water).

The soilability of the bank notes treated with the method described in Example 1 was evaluated by means of the following procedure.

3 g of synthetic dirt and 100 g of glass beads were taken and the entire system was placed in a Retsch centrifugal Soiling Tester, of the ball mill type, SI, with the paper specimens to be tested, and the entire system was rotated at 360 rpm for two minutes.

The specimens were taken and the coarsest particles were removed from the surface of the paper and were compared with an untreated specimen, assigning a score from 0 to 4 (0 = worst result, 4 = best result) depending on whether the treated bank notes had:
0: dirt accumulated on 100% of the surface of the bank note;
1: dirt accumulated on more than 50% of the surface of the bank note;
2: dirt accumulated on less than 50% of the surface of the bank note;
3: slight quantity of dirt accumulated on the bank note;
4: no dirt accumulated on the bank note.

A bank note treated according to the method described in Example 1 had a score of 3, where the acceptance limit was 2.

### Test 3

A formulation of synthetic dirt was prepared.

The following were introduced in a beaker:
- 77 g of quartz sand;
- 2 g of magnetite;
- 16 g of powdered peat;
- 5 g of graphite powder.

The mixture was crushed until the particles were able to pass through a 0.08-mm mesh screen.

Preparation of the synthetic dirt also provides for the obtainment of a liquid part thus prepared.

The following were added in a beaker:
- 250 ml of benzene;
- 1 g of bitumen;
- 2 g of beef fat;
- 2 g of glycerol-1-monoleate;
- 3 g of paraffin.

Once the liquid part had been mixed well, 6 g of the previously obtained powdered mix, together with 100 g of silica gel, were added.

The entire system was mixed for 20 minutes and then filtered. Benzene residues were then removed by evaporation.

The soilability of the bank notes treated with the method described in Example 1 was evaluated by means of the following procedure.

Paper specimens to be tested were fixed with adhesive tape together with a reference paper of similar dimensions on the internal surface of a steel cylinder (with a diameter of 15.5 cm and a height of 35 cm), closed at its ends by means of plugs of inert plastic.

Together with the paper, 6 g of synthetic dirt (obtained as described earlier) and 5 steel marbles weighing 50 g each were added inside the cylinder.

The cylinder was closed and then rotated for 15 minutes in one direction and for a further 15 minutes in the opposite direction at the rate of 125 rpm, so as to bring the paper into contact with the dirt and stress it mechanically by way of the action of the marbles that facilitate contact between the dirt and the paper.

The specimens were taken out of the cylinder and compressed air was blown onto them in order to remove coarse residues.

The treated specimens were compared with the untreated paper used as reference.

A bank note treated according to the method described in Example 1 had a score of 3 on a scale of 0 to 4 (0 = worst result, 4 = best result), where the acceptance limit was equal to 2 (assessed on the untreated paper used as reference).

### Test 4

A formulation of synthetic dirt thus constituted was prepared:
- 0.3 g of kaolin screened at 325 mesh;
- 0.4 g of soybean oil;
- 0.4 g of olive oil;
- 0.4 g of ethyl alcohol.

The soilability of the bank notes treated with the method described in Example 1 was evaluated by means of the following procedure.

Paper specimens with dimensions equal to those of the treated bank note were cut and were immersed in distilled water for 15 seconds.

The specimen was dried by inserting it between two sheets of absorbent paper.

Screw-on Teflon weights were applied to the corners of the bank note.

0.3 g of kaolin were mixed with 2000 g of glass beads with a diameter of 2.5 mm, and the soybean oil, olive oil and ethyl alcohol were added.

The entire system was placed in a cylindrical container with a diameter of 23 cm and a height of 33 cm.

The cylindrical container was closed and rotated at a rate of 60 rpm for 5 minutes.

After opening the cylindrical container, 20 specimens of treated bank notes were introduced therein and, after the cylindrical container had been closed again, it was rotated again in a first direction for 15 minutes and then in the opposite direction for a further 15 minutes.

The specimens of treated bank notes were removed from the cylindrical container and the Teflon weights were removed.

The specimens were placed on a wet cloth, flattened and cleaned and subsequently immersed in distilled water for 15 seconds. They were extracted from the water and placed between two sheets of absorbent paper to remove the excess water.

The entire process was repeated a second time, introducing the bank notes again in the cylindrical container.

The treated specimens were compared with the untreated specimens used as reference by means of a gray scale.

A bank note treated according to the method described in Example 1 had a score of 4/5 on a scale of 1 to 5 (1 = worst result, 5 = best result), where the acceptance limit was 3.

It has been found that the composition according to the invention and the method for its application to bank notes and the like allow to obtain bank notes and security papers reducing, or at least drastically reducing, the drawbacks currently observed, also offering the possibility to obtain a continuous range of different performance as a function of the gradual variation of the proportion among the various components of the mixture.

In this regard, the use in the composition according to the invention of polycarbonate-based aliphatic polyurethane ensures that a tough film is obtained which, by covering the entire surface to be treated, makes the paper impermeable to oily and/or fatty substances.

Adding the fluorinated compound to the composition according to the invention also minimizes affinity between the particles/microparticles of dirt and the surface of polymeric material, preventing the particles from
- 0.1 g of graphite screened at 2000 mesh;
   adhering to it and facilitating their removal from the surface after handling.

In particular, bank notes and paper in general treated by means of the described method have been found to be resistant to dirt, well-printable, and very tenaciously resistant to washing with detergent; they also preserve the characteristics of strength (to be understood as "double creases", resistance to tearing and breaking load) that are peculiar to bank note paper.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for treatment of bank notes and/or security paper in general to become dirt resistant, **characterized in that** it provides for deposition on the surface to be treated of a composition comprising a polycarbonate-based aliphatic polyurethane, a polyether-based aliphatic polyurethane and a fluorinated compound, said fluorinated compound comprising an aqueous dispersion of perfluoro substituted anionic acid, and **in that** the dry weight ratio between the quantity of said polycarbonate-based aliphatic polyurethane and the quantity of said polyether-based aliphatic polyurethane in said composition is comprised between 0.25 and 4, the dry weight percentage of said fluorinated compound with respect to said polyether-based aliphatic polyurethane in said composition being comprised between 1% and 10%, said polycarbonate-based aliphatic polyurethane and said polyether-based aliphatic polyurethane being present in an amount of 20-80%, considered as dry weight.

2. The method according to claim 1, **characterized in that** said polycarbonate-based aliphatic polyurethane and/or said polyether-based aliphatic polyurethane have a glass transition temperature (Tg) lower than -20°C.

3. The method according to one or more of the preceding claims, **characterized in that** said polycarbonate-based aliphatic polyurethane and/or said polyether-based aliphatic polyurethane have a breaking load comprised between 15 and 70 MPa.

4. The method according to one or more of the preceding claims, **characterized in that** said polycarbonate-based aliphatic polyurethane and/or said polyether-based aliphatic polyurethane have an elongation comprised between 150% and 600%.

5. The method according to one or more of the preceding claims, **characterized in that** said composition comprises a cross-linking agent selected from the group that comprises cross-linking agents of the melamine type and polyisocyanic cross-linking agents.

6. The method according to one or more of the preceding claims, **characterized in that** the dry weight percentage of said cross-linking agent with respect to said polyether-based aliphatic polyurethane in said composition is comprised between 15% and 30%.

7. The method according to one or more of the preceding claims, **characterized in that** the dry weight percentage of said cross-linking agent with respect to said polyether-based aliphatic polyurethane in said composition is comprised between 18% and 26% .

8. The method according to one or more of the preceding claims, **characterized in that** the dry weight percentage of said cross-linking agent with respect to said polyether-based aliphatic polyurethane in said composition is comprised between 20% and 24%

9. The method according to one or more of the preceding claims, **characterized in that** said composition is applied to said surface in liquid form with a solid content comprised between 15% and 45% and in a quantity adapted to allow the paper to absorb a quantity of dry material comprised between 2 and 14 g/m².

10. The method according to one or more of the preceding claims, **characterized in that** said composition is applied to said surface by size pressing, film pressing, coating or passing through a printing machine.

11. A composition, comprising a polycarbonate-based aliphatic polyurethane, a polyether-based aliphatic polyurethane and a fluorinated compound, said fluorinated compound comprising an aqueous dispersion of perfluoro substituted anionic acid, **characterized in that** the dry weight ratio between the quantity of said polycarbonate-based aliphatic polyurethane and the quantity of said polyether-based aliphatic polyurethane is comprised between 0.25 and 4, and **in that** the dry weight percentage of said fluorinated compound with respect to said polyether-based aliphatic polyurethane in said composition is comprised between 1% and 10%, said polycarbonate-based aliphatic polyurethane and said polyether-based aliphatic polyurethane being present in an amount of 20-80%, considered as dry weight.

12. The composition according to claim 11, **characterized in that** said polycarbonate-based aliphatic polyurethane and/or said polyether-based aliphatic polyurethane have a glass transition temperature (Tg) lower than -20°C.

13. The composition according to one or more of claims 11 to 12, **characterized in that** said polycarbonate-based aliphatic polyurethane and/or said polyether-based aliphatic polyurethane have a breaking load comprised between 15 and 70 MPa.

14. The composition according to one or more of claims 11 to 13, **characterized in that** said polycarbonate-based aliphatic polyurethane and/or said polyether-based aliphatic polyurethane have an elongation comprised between 150% and 600%.

15. The composition according to one or more of claims 11 to 14, **characterized in that** it comprises a cross-linking agent selected from the group that comprises cross-linking agents of the melamine type and polyisocyanic cross-linking agents.

16. The composition according to one or more of claims 11 to 15, **characterized in that** the dry weight percentage of said cross-linking agent with respect to said polyether-based aliphatic polyurethane in said composition is comprised between 15% and 30%.

17. A bank note or security paper, **characterized in that** it has, at least at one of its faces, a layer of a composition according to one or more of claims 11 to 16.

## Patentansprüche

1. Ein Verfahren zur schmutzabweisenden Ausrüstung von Banknoten und/oder Wertpapieren im Allgemeinen, **dadurch gekennzeichnet, dass** es das Auftragen, auf die zu behandelnde Oberfläche, einer Zusammensetzung vorsieht, die Folgendes umfasst: ein aliphatisches Polyurethan auf Polycarbonatbasis, ein aliphatisches Polyurethan auf Polyetherbasis und eine fluorierte Verbindung, wobei die fluorierte Verbindung eine wässerige Dispersion von Perfluor-substituierter anionischer Säure umfasst, und dadurch, dass das Verhältnis, auf Bezugsbasis der Trockenmasse, zwischen der Menge des aliphatischen Polyurethans auf Polycarbonatbasis und der Menge des aliphatischen Polyurethans auf Polyetherbasis in der Zusammensetzung zwischen 0,25 und 4 beträgt, wobei der Prozentsatz, auf Bezugsbasis der Trockenmasse, der fluorierten Verbindung im Verhältnis zu dem aliphatischen Polyurethan auf Polyetherbasis in der Zusammensetzung zwischen 1% und 10% beträgt; wobei das aliphatische Polyurethan auf Polycarbonatbasis und das aliphatische Polyurethan auf Polyetherbasis in einer Menge von 20-80%, auf Bezugsbasis der Trockenmasse, vorhanden sind.

2. Das Verfahren gemäß Anspruch 1, **dadurch gekennzeichnet, dass** das aliphatische Polyurethan auf Polycarbonatbasis und/oder das aliphatische Polyurethan auf Polyetherbasis eine Glasübergangstemperatur (Tg) niedriger als -20°C haben.

3. Das Verfahren gemäß einem oder mehreren der obigen Ansprüche, **dadurch gekennzeichnet, dass** das aliphatische Polyurethan auf Polycarbonatbasis und/oder das aliphatische Polyurethan auf Polyetherbasis eine Bruchlast zwischen 15 und 70 MPa haben.

4. Das Verfahren gemäß einem oder mehreren der obigen Ansprüche, **dadurch gekennzeichnet, dass** das aliphatische Polyurethan auf Polycarbonatbasis und/oder das aliphatische Polyurethan auf Polyetherbasis eine Verlängerung zwischen 150% und 600% haben.

5. Das Verfahren gemäß einem oder mehreren der obigen Ansprüche, **dadurch gekennzeichnet, dass** die Zusammensetzung ein Quervernetzungsmittel umfasst, das gewählt ist aus der Gruppe, die Quervernetzungsmittel vom Melamintyp und polyisocyanische Quervernetzungsmittel umfasst.

6. Das Verfahren gemäß einem oder mehreren der obigen Ansprüche, **dadurch gekennzeichnet, dass** der Prozentsatz, auf Bezugsbasis der Trockenmasse, des Quervernetzungsmittels im Verhältnis zu dem aliphatischen Polyurethan auf Polyetherbasis in der Zusammensetzung zwischen 15% und 30% beträgt.

7. Das Verfahren gemäß einem oder mehreren der obigen Ansprüche, **dadurch gekennzeichnet, dass** der Prozentsatz, auf Bezugsbasis der Trockenmasse, des Quervernetzungsmittels im Verhältnis zu dem aliphatischen Polyurethan auf Polyetherbasis in der Zusammensetzung zwischen 18% und 26% beträgt.

8. Das Verfahren gemäß einem oder mehreren der obigen Ansprüche, **dadurch gekennzeichnet, dass** der Prozentsatz, auf Bezugsbasis der Trockenmasse, des Quervernetzungsmittels im Verhältnis zu dem aliphatischen Polyurethan auf Polyetherbasis in der Zusammensetzung zwischen 20% und 24% beträgt.

9. Das Verfahren gemäß einem oder mehreren der obigen Ansprüche, **dadurch gekennzeichnet, dass** die Zusammensetzung auf die Oberfläche in flüssiger Form aufgetragen wird, mit einem Feststoffgehalt zwischen 15% und 45% und in einer Menge, die geeignet ist, es dem Papier zu ermöglichen, eine Menge an Trockenmaterial zwischen 2 und 14 g/m² zu absorbieren.

10. Das Verfahren gemäß einem oder mehreren der obigen Ansprüche, **dadurch gekennzeichnet, dass** die Zusammensetzung auf die Oberfläche durch Leimpressen, Schichtpressen, Beschichtung oder Durchlauf durch eine Druckmaschine aufgetragen wird.

11. Eine Zusammensetzung, die ein aliphatisches Polyurethan auf Polycarbonatbasis, ein aliphatisches Polyurethan auf Polyetherbasis und eine fluorierte Verbindung umfasst, wobei die fluorierte Verbindung eine wässerige Dispersion von Perfluor-substituierter anionischer Säure umfasst, **dadurch gekennzeichnet, dass** das Verhältnis, auf Bezugsbasis der Trockenmasse, zwischen der Menge des aliphatischen Polyurethans auf Polycarbonatbasis und der Menge des aliphatischen Polyurethans auf Polyetherbasis zwischen 0,25 und 4 beträgt, und dadurch, dass der Prozentsatz, auf Bezugsbasis der Trockenmasse, der fluorierten Verbindung im Verhältnis zu dem aliphatischen Polyurethan auf Polyetherbasis in der Zusammensetzung zwischen 1% und 10% beträgt; wobei das aliphatische Polyurethan auf Polycarbonatbasis und das aliphatische Polyurethan auf Polyetherbasis in einer Menge von 20-80%, auf Bezugsbasis der Trockenmasse, vorhanden sind.

12. Die Zusammensetzung gemäß Anspruch 11, **dadurch gekennzeichnet, dass** das aliphatische Polyurethan auf Polycarbonatbasis und/oder das aliphatische Polyurethan auf Polyetherbasis eine Glasübergangstemperatur (Tg) niedriger als -20°C haben.

13. Die Zusammensetzung gemäß einem oder mehreren der Ansprüche 11 bis 12, **dadurch gekennzeichnet, dass** das aliphatische Polyurethan auf Polycarbonatbasis und/oder das aliphatische Polyurethan auf Polyetherbasis eine Bruchlast zwischen 15 und 70 MPa haben.

14. Die Zusammensetzung gemäß einem oder mehreren der Ansprüche 11 bis 13, **dadurch gekennzeichnet, dass** das aliphatische Polyurethan auf Polycarbonatbasis und/oder das aliphatische Polyurethan auf Polyetherbasis eine Verlängerung zwischen 150% und 600% haben.

15. Die Zusammensetzung gemäß einem oder mehreren der Ansprüche 11 bis 14, **dadurch gekennzeichnet, dass** sie ein Quervernetzungsmittel umfasst, das gewählt ist aus der Gruppe, die Quervernetzungsmittel vom Melamintyp und polyisocyanische Quervernetzungsmittel umfasst.

16. Die Zusammensetzung gemäß einem oder mehreren der Ansprüche 11 bis 15, **dadurch gekennzeichnet, dass** der Prozentsatz, auf Bezugsbasis der Trockenmasse, des Quervernetzungsmittels im Verhältnis zu dem aliphatischen Polyurethan auf Polyetherbasis in der Zusammensetzung zwischen 15% und 30% beträgt.

17. Eine Banknote oder ein Wertpapier, **dadurch gekennzeichnet, dass** sie/es auf mindestens einer ihrer/seiner Seiten eine Schicht aus einer Zusammensetzung gemäß einem oder mehreren der Ansprüche 11 bis 16 hat.

## Revendications

1. Procédé visant au traitement de billets de banque et/ou d'un papier de sécurité en général, pour le(s) rendre résistant(s) à la salissure, **caractérisé en ce qu'**il assure le dépôt, sur la surface à traiter, d'une composition contenant un polyuréthane aliphatique à base de polycarbonate, un polyuréthane aliphatique à base de polyéther et un composé fluoré, ledit composé fluoré étant constitué par une dispersion aqueuse d'acide anionique à substitution perfluoro, et **en ce que** le rapport en poids de matière sèche entre la quantité dudit polyuréthane aliphatique à base de polycarbonate et la quantité dudit polyuréthane aliphatique à base de polyéther dans ladite composition est compris dans l'intervalle allant de 0,25 à 4, le pourcentage en poids de matière sèche dudit composé fluoré, rapporté audit polyuréthane aliphatique à base de polyéther dans ladite composition, étant compris dans l'intervalle allant de 1 % à 10 %, ledit polyuréthane aliphatique à base de polycarbonate et ledit polyuréthane aliphatique à base de polyéther se trouvant en une proportion, exprimée en poids de matière sèche, de 20 % à 80 %.

2. Procédé conforme à la revendication 1, **caractérisé en ce que** ledit polyuréthane aliphatique à base de polycarbonate et/ou ledit polyuréthane aliphatique à base de polyéther présente(nt) une température de transition vitreuse (Tg) inférieure à -20 °C.

3. Procédé conforme à une ou plusieurs des revendications précédentes, **caractérisé en ce que** ledit polyuréthane aliphatique à base de polycarbonate et/ou ledit polyuréthane aliphatique à base de polyéther présente(nt) une force de rupture comprise dans l'intervalle allant de 15 à 70 MPa.

4. Procédé conforme à une ou plusieurs des revendications précédentes, **caractérisé en ce que** ledit polyuréthane aliphatique à base de polycarbonate et/ou ledit polyuréthane aliphatique à base de polyéther présente(nt) un allongement compris dans l'intervalle allant de 150 % à 600 %.

5. Procédé conforme à une ou plusieurs des revendications précédentes, **caractérisé en ce que** ladite composition comporte un agent de réticulation choisi dans l'ensemble constitué par des agents de réticulation du type mélamine et des agents de réticulation polyisocyaniques.

6. Procédé conforme à une ou plusieurs des revendications précédentes, **caractérisé en ce que** le pourcentage en poids de matière sèche dudit agent de réticulation, rapporté audit polyuréthane aliphatique à base de polyéther dans ladite composition, est compris dans l'intervalle allant de 15 % à 30 %.

7. Procédé conforme à une ou plusieurs des revendications précédentes, **caractérisé en ce que** le pourcentage en poids de matière sèche dudit agent de réticulation, rapporté audit polyuréthane aliphatique à base de polyéther dans ladite composition, est compris dans l'intervalle allant de 18 % à 26 %.

8. Procédé conforme à une ou plusieurs des revendications précédentes, **caractérisé en ce que** le pourcentage en poids de matière sèche dudit agent de réticulation, rapporté audit polyuréthane aliphatique à base de polyéther dans ladite composition, est compris dans l'intervalle allant de 20 % à 24 %.

9. Procédé conforme à une ou plusieurs des revendications précédentes, **caractérisé en ce que** l'on applique ladite composition sur ladite surface sous forme liquide, avec une teneur en matières solides comprise dans l'intervalle allant de 15 % à 45 %, et en une quantité permettant au papier d'absorber une quantité de matière sèche comprise dans l'intervalle allant de 2 à 14 g/m².

10. Procédé conforme à une ou plusieurs des revendications précédentes, **caractérisé en ce que** l'on applique ladite composition sur ladite surface par couchage à la presse encolleuse, pressage de film, enduction ou passage par une machine à imprimer.

11. Composition contenant un polyuréthane aliphatique à base de polycarbonate, un polyuréthane aliphatique à base de polyéther et un composé fluoré, ledit composé fluoré étant constitué par une dispersion aqueuse d'acide anionique à substitution perfluoro, **caractérisée en ce que** le rapport en poids de matière sèche entre la quantité dudit polyuréthane aliphatique à base de polycarbonate et la quantité dudit polyuréthane aliphatique à base de polyéther dans ladite composition est compris dans l'intervalle allant de 0,25 à 4, et **en ce que** le pourcentage en poids de matière sèche dudit composé fluoré, rapporté audit polyuréthane aliphatique à base de polyéther dans ladite composition, est compris dans l'intervalle allant de 1 % à 10 %, ledit polyuréthane aliphatique à base de polycarbonate et ledit polyuréthane aliphatique à base de polyéther se trouvant en une proportion, exprimée en poids de matière sèche, de 20 % à 80 %.

12. Composition conforme à la revendication 11, **caractérisée en ce que** ledit polyuréthane aliphatique à base de polycarbonate et/ou ledit polyuréthane aliphatique à base de polyéther présente(nt) une température de transition vitreuse (Tg) inférieure à -20 °C.

13. Composition conforme à une ou plusieurs des revendications 11 et 12, **caractérisée en ce que** ledit polyuréthane aliphatique à base de polycarbonate et/ou ledit polyuréthane aliphatique à base de polyéther présente(nt) une force de rupture comprise dans l'intervalle allant de 15 à 70 MPa.

14. Composition conforme à une ou plusieurs des revendications 11 à 13, **caractérisée en ce que** ledit polyuréthane aliphatique à base de polycarbonate et/ou ledit polyuréthane aliphatique à base de polyéther présente(nt) un allongement compris dans l'intervalle allant de 150 % à 600 %.

15. Composition conforme à une ou plusieurs des revendications 11 à 14, **caractérisée en ce qu'**elle comporte un agent de réticulation choisi dans l'ensemble constitué par des agents de réticulation du type mélamine et des agents de réticulation polyisocyaniques.

16. Composition conforme à une ou plusieurs des revendications 11 à 15, **caractérisée en ce que** le pourcentage en poids de matière sèche dudit agent de réticulation, rapporté audit polyuréthane aliphatique à base de polyéther dans ladite composition, est compris dans l'intervalle allant de 15 % à 30 %.

17. Billet de banque ou papier de sécurité, **caractérisé en ce qu'**il porte, au moins sur l'une de ses faces, une couche d'une composition conforme à une ou plusieurs des revendications 11 à 16.
